# EUROPEAN PATENT APPLICATION

(11) **EP 4 768 345 A1**
(43) Date of publication of application: **01.07.2026**
(21) Application number: 25225006.3
(22) Date of filing: 18.12.2025
(51) Int. Cl.: B60R 16/023, H01R 43/00, H02G 3/08

(54) **SEALED CONNECTION RECEPTACLES FOR POWER DISTRIBUTION MODULES**

(30) Priority: 31.12.2024 CN 202412000380
(71) Applicant: Suzhou Littelfuse OVS Co., Ltd., Suzhou Jiangsu 215021 (CN)
(72) Inventor: Li, Yuanxue, Suzhou, 215021 (CN); Liu, Renan, Suzhou, 215021 (CN)
(74) Representative: Arnold & Siedsma

(57) **Abstract**

A connection receptacle including a sidewall bounding a floor having a top surface and a bottom surface, a plurality of pin apertures extending through the floor, a plurality of molding apertures extending through the floor, a recessed channel formed in the bottom surface of the floor, the recessed channel extending between two of the plurality of molding apertures, and a sealing pad including a main body disposed on the top surface of the floor, the main body having a plurality of pin apertures extending therethrough, a plurality of pillars extending from a bottom of the main body through respective ones of the plurality of molding apertures in the floor, and a crossmember extending through the recessed channel in the bottom surface of the floor and connecting two of the plurality of pillars.

## Description

### BACKGROUND

### Field

The present disclosure relates generally to power distribution modules and relates more particularly to sealed connection receptacles for power distribution modules.

### Description of Related Art

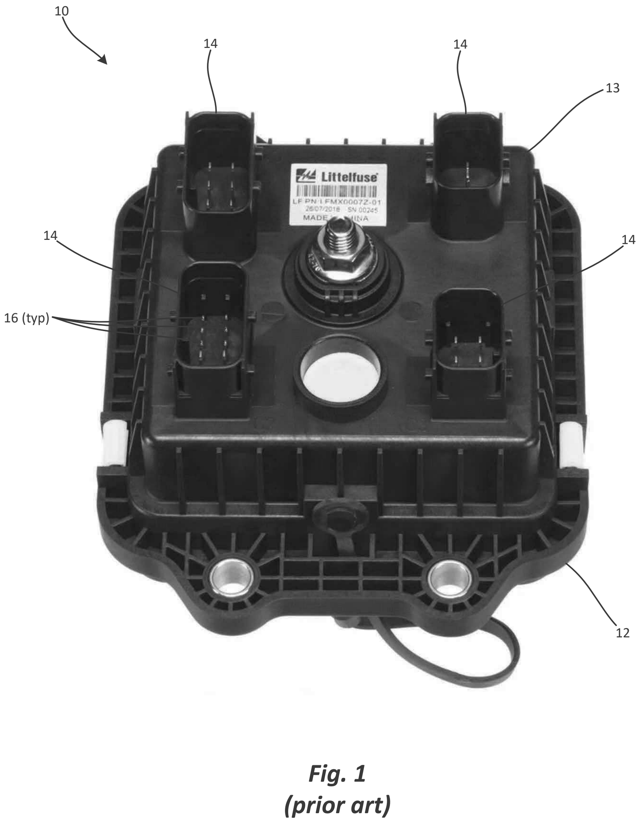

A power distribution module (PDM) is an electrical component that manages and distributes power in an electric vehicle. An example of a prior art PDM 10 is shown in FIG. 1. The PDM 10 includes a housing 12 containing various electrical switching devices and/or circuit protection devices (e.g., relays, fuses, etc.), hereinafter collectively referred to as "PDM devices," connected to a circuit board within the housing 12. A cover, base, or sidewall 13 (hereinafter "the cover 13") of the housing 12 may include connection receptacles 14 adapted to matingly receive connectors of wiring harnesses (not shown) for establishing electrical connections between the PDM devices and various systems and components (e.g., lighting, sensors, infotainment, etc.) in an electric vehicle. Each connection receptacle 14 may include a plurality of conductive pins 16 that extend through the cover 13 and that are connected to the circuit board within the housing 12. The pins 16 may be adapted to engage complementary sockets in a connector of a wiring harness that is plugged into the connection receptacle 14, thereby providing electrical connections between the wiring harness and the PDM devices within the housing 12.

Water ingress in PDMs poses a critical reliability and safety challenge. For example, if water is able to reach the pins 16 of a connection receptacle 14, such as when a connector of a wiring harness is not plugged into the connection receptacle 14 or if a gasket of a connector that is plugged into the receptacle 14 is undersized or is damaged, it may be possible for water to seep through gaps around the pins 16 and into the housing 12. Such water ingress can lead to short circuits, corrosion, and malfunction of critical systems, ultimately compromising vehicle performance and safety. To mitigate the risk of water ingress, observance of water resistance standards (e.g., IPX7, IPX9K, etc.) is essential. Adherence to such standards ensures that a PDM can withstand temporary exposure to water without damage, making the PDM robust against typical exposure scenarios like driving in heavy rain, water splashes, car washes, etc.

It is with respect to these and other considerations that the present improvements may be useful.

### SUMMARY

This Summary is provided to introduce a selection of concepts in a simplified form further described below in the Detailed Description. This Summary is not intended to identify key features or essential features of the claimed subject matter, nor is the summary intended as an aid in determining the scope of the claimed subject matter.

A connection receptacle in accordance with the present disclosure may include a sidewall bounding a floor having a top surface and a bottom surface, a plurality of pin apertures extending through the floor, a plurality of molding apertures extending through the floor, a recessed channel formed in the bottom surface of the floor, the recessed channel extending between two of the plurality of molding apertures, and a sealing pad including a main body disposed on the top surface of the floor, the main body having a plurality of pin apertures extending therethrough, a plurality of pillars extending from a bottom of the main body through respective ones of the plurality of molding apertures in the floor, and a crossmember extending through the recessed channel in the bottom surface of the floor and connecting two of the plurality of pillars.

A method of forming a sealing pad in a connection receptacle is provided, wherein the connection receptacle includes a sidewall bounding a floor having a top surface and a bottom surface, a plurality of pin apertures extending through the floor, a plurality of molding apertures extending through the floor, and a recessed channel formed in the bottom surface of the floor, the recessed channel extending between two of the plurality of molding apertures, and the method includes moving a first molding tool portion into a position below the floor, including moving an upper surface of the first molding tool portion into flat abutment with the bottom surface of the floor, wherein the first molding tool portion incudes a plurality of tines extending from the upper surface thereof. Each tine includes a base portion extending into a respective one of the plurality of pin apertures in the floor, and a neck portion extending from the base portion a distance above the top surface of the floor. The method further includes inserting a second molding tool portion into the connection receptacle, including disposing a lower surface of the second molding tool portion atop the neck portions of the tines of the first molding tool portion, and injecting a molding compound through a channel in one of the first molding tool portion and the second molding tool portion, the molding compound filling a cavity between the upper surface of the first molding tool portion and the lower surface of the second molding tool portion, including filling the molding the molding apertures and the recessed channel.

A power distribution module housing in accordance with the present disclosure incudes a cover, and a connection receptacle extending from an exterior of the cover for receiving a connector of a wiring harness the connection receptacle including a sidewall extending from an exterior of the cover and bounding a floor having a top surface and a bottom surface, a plurality of pin apertures extending through the floor, a plurality of molding apertures extending through the floor, a recessed channel formed in the bottom surface of the floor, the recessed channel extending between two of the plurality of molding apertures, and a sealing pad including a main body disposed on the top surface of the floor, the main body having a plurality of pin apertures extending therethrough, a plurality of pillars extending from a bottom of the main body through respective ones of the plurality of molding apertures in the floor, and a crossmember extending through the recessed channel in the bottom surface of the floor and connecting two of the plurality of pillars.

### BRIEF DESCRIPTION OF THE DRAWINGS

**FIG. 1** is a perspective illustrating a power distribution module in accordance with the prior art;
**FIG. 2** is a perspective view illustrating a housing of a power distribution module in accordance with the present disclosure;
**FIG. 3A** is a top view illustrating a connection receptacle of the housing shown in **FIG. 2****;** and
**FIG. 3B** is a bottom view illustrating a connection receptacle of the housing shown in **FIG. 2****;**
**FIGS. 4A** and **4B** are a perspective view and a cross-sectional view, respectively, illustrating a method of overmolding a sealing pad onto a floor of the connection receptacle shown in **FIGS. 3A** and **3B****;**
**FIG. 5** is a perspective view illustrating a sealing pad in accordance with the present disclosure; and
**FIG. 6** is a cross-sectional view illustrating a portion of a power distribution module in accordance with the present disclosure, including the connection receptacle shown in **FIGS. 3A** and **3B** with a sealing pad overmolded onto a floor thereof.

### DETAILED DESCRIPTION

A sealed connection receptacle for a power distribution module (PDM) and an associated method of manufacture will now be described more fully hereinafter with reference to the accompanying drawings. The sealed connection receptacle and the method may have many different forms and should not be construed as being limited to the examples set forth herein. Rather, these examples are provided so that this disclosure will convey certain exemplary aspects of the sealed connection receptacle and the method to those skilled in the art.

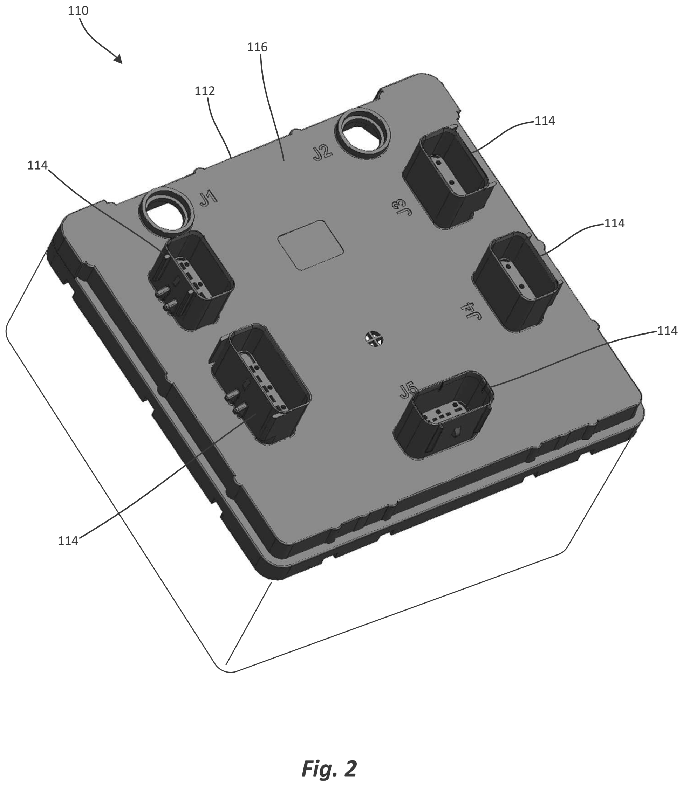

Referring to **FIG. 2****,** a perspective view illustrating a PDM housing 110 (hereinafter "the housing 110") is shown. The housing 110 may be adapted to hold various devices and components that are typically found in PDMs (e.g., a circuit board, relays, fuses, etc., hereinafter referred to collectively as "PDM devices") as will be familiar to those of skill in the art. The specific number and types of PDM devices implemented in the housing 110, and the size and shape of the housing 110 itself, may vary depending on an intended application. The present disclosure is not limited in this regard.

The housing 110 may include a cover, base, sidewall, or other exterior portion (hereinafter generically referred to as "the cover 112") having one or more connection receptacles 114 extending from an exterior surface 116 thereof. The connection receptacles 114 may be integrally formed portions of the cover 112 (e.g., the cover 112 and the connection receptacles 114 may be molded from a single piece of plastic). The present disclosure is not limited in this regard. The connection receptacles 114 may be generally tubular, cuff-shaped structures adapted to matingly receive connectors of wiring harnesses (not shown) for establishing electrical connections between PDM devices within the housing 110 and various external systems and components (e.g., lighting, sensors, infotainment, etc. in an electric vehicle). For example, the PDM devices may provide electrical switching and/or electrical circuit protection for such systems and components.

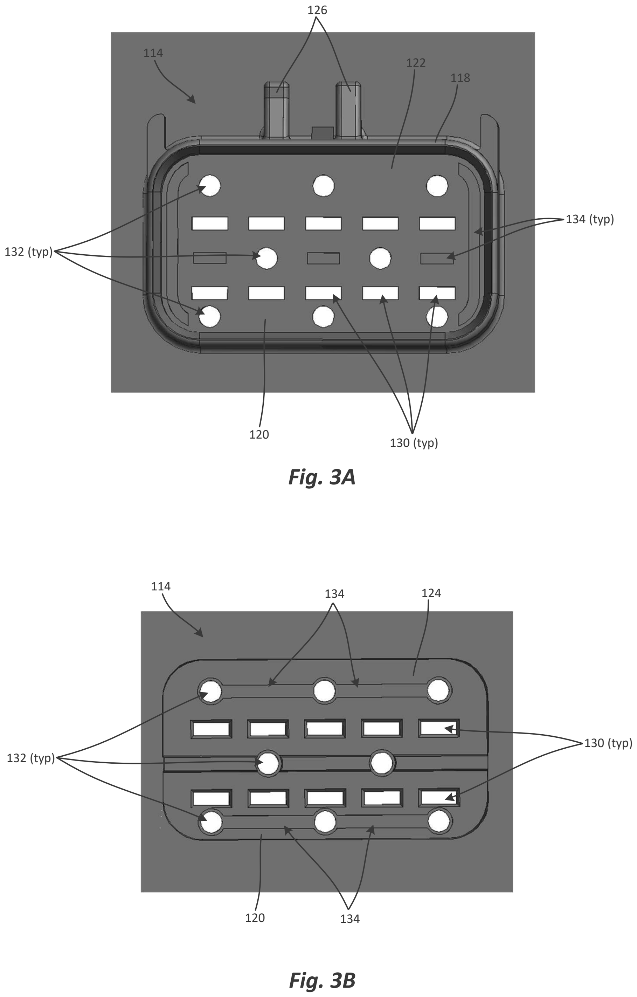

Referring to **FIGS. 3A** and **3B****,** a top view and a bottom view of one of the connection receptacles 114 of the cover 112 are shown, respectively. The connection receptacle 114 may include a sidewall 118 extending from the exterior surface 116 of the cover 112 and bounding a floor 120 having a top surface 122 and a bottom surface 124. The sidewall 118 may include one or more latching elements 126 extending therefrom. The latching elements 126 may be adapted to engage corresponding latching elements on a connector of a wiring harness (not shown) that is plugged into the connection receptacle 114 for establishing a secure mechanical connection therebetween.

The floor 120 of the connection receptacle 114 may include a plurality of pin apertures 130 formed therethrough for allowing electrically conductive pins (not shown) to extend from within the housing 110 (e.g., from a circuit board within the housing 110) into the connection receptacle 114. The floor 120 may further include a plurality of molding apertures 132 formed therethrough for allowing a molding material (e.g., silicone) to flow between the top surface 122 of the floor 120 and the bottom surface 124 of the floor 120 during an overmolding process as further described below.

The top surface 122 of the floor 120 may include one or more recessed slots 134 formed therein for collecting molding material during an overmolding process as further described below. As shown in **FIG. 3A****,** the recessed slots 134 may include curved, generally bracket-shaped slots located adjacent the sidewall 118 at opposing longitudinal sides of the floor 120, as well as smaller, rectangular slots extending across a middle or center of the floor 120. The arrangement of the recessed slots 134 depicted in **FIG. 3A** is not intended to be limiting, and it will be understood that the sizes, shapes, locations, and total number of the recessed slots 134 may be varied without departing from the scope of the present disclosure. The recessed slots 134 may be entirely omitted.

Referring to **FIG. 3B****,** the bottom surface 124 of the floor 120 may include one or more recessed channels 136 formed therein that extend between, and connect, two or more of the molding apertures 132. For example, as shown in **FIG. 3B****,** recessed channels 136 may extend between, and may connect, three longitudinally spaced-apart molding apertures 132 on a first lateral side of the floor 120, and recessed channels 136 may extend between, and may connect, three longitudinally spaced-apart molding apertures 132 on a second lateral side of the floor 120. The arrangement of recessed channels 136 depicted in **FIG. 3B** is not intended to be limiting, and it will be understood that the sizes, shapes, locations, and total number of the recessed channels 136 may be varied without departing from the scope of the present disclosure.

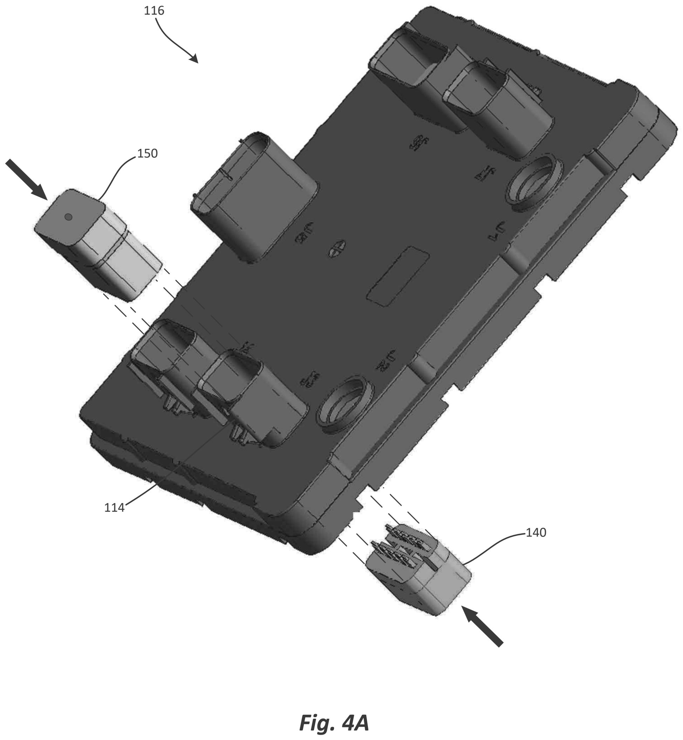

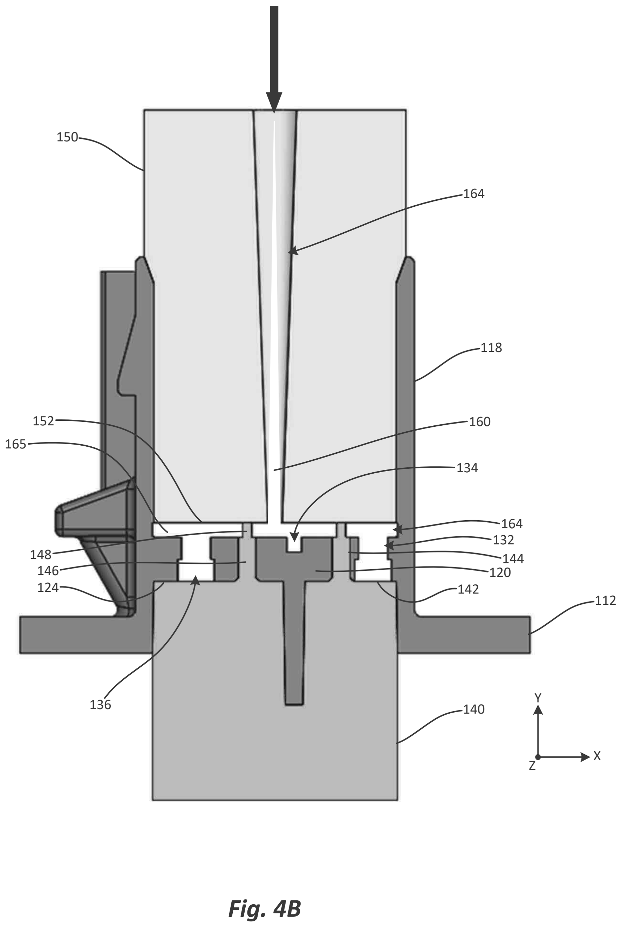

Referring to **FIGS. 4A** and **4B****,** a method of molding a sealing pad onto the floor 120 of the connection receptacle 114 is shown. As will be described in greater detail below, the sealing pad may provide robust protection against water ingress around electrically conductive pins that extend through the pin apertures 130 of the floor 120 and into the connection receptacle 114.

As shown in **FIGS. 4A** and **4B****,** the method of the present disclosure may include moving a first molding tool portion 140 into a position below the floor 120 of the connection receptacle 114. The first molding tool portion 140 may have a generally planar upper surface 142 that is moved into flat abutment with the bottom surface 124 of the floor 120 as shown in **FIG. 4B****.** The first molding tool portion 140 may include tines 144 that extend from the upper surface 142 into respective pin apertures 130 in the floor 120. The number and arrangement of the tines 144 may correspond to the number and arrangement of the pin apertures 130. Each tine 144 may include a base portion 146 that fits into a respective pin aperture 130 in a close clearance relationship therewith, filling substantially an entire interior volume of the pin aperture 130. Each base portion 146 may have a height measured along the Y axis of the illustrated Cartesian coordinate system that is generally equal to a height of the floor 120. Thus, a top surface of each base portion 146 may be generally coplanar with the top surface of the floor 120. Each tine 144 may further include a neck portion 148 extending from a top of its respective base portion 146 and having a width and depth (measured along the X and Z axes of the illustrated Cartesian coordinate system, respectively), that are smaller than a width and depth of the base portion 146. A width and depth of a neck portion 148 may each be about 1 millimeter smaller than a width and depth of its respective base portion 146. The present disclosure is not limited in this regard. The neck portions 148 may have a height in a range of about 1 millimeter to about 5 millimeters. Thus, when the first molding tool portion 140 is placed in abutment with the floor 120 of the connection receptacle 114 as shown in **FIG. 4B****,** the neck portions 148 may extend about 1-5 millimeters above the top surface 122 of the floor 120.

The method of the present disclosure may further include inserting a second molding tool portion 150 into the connection receptacle 114. The second molding tool portion 150 may have a generally planar lower surface 152 that may be disposed atop the neck portions 148 of the tines 144 in direct contact therewith as shown in **FIG. 4B****.** The lower surface 152 may thus be spaced apart from, and oriented generally parallel to, the top surface 122 of the floor 120, with the distance between the lower surface 152 and the top surface 122 being dictated by the height of the neck portions 148.

With the first molding tool portion 140 and the second molding tool portion 150 positioned as described above and as shown in **FIG. 4B****,** a molding compound 160 may be injected into a channel 162 that extends through the second molding tool portion 150 and into a cavity 164 defined by the upper surface 142 of the first molding tool portion 140 and the lower surface 152 of the second molding tool portion 150. Alternatively, the molding compound 160 may be injected through a channel extending through the first molding tool portion 140. The present disclosure is not limited in this regard. The molding compound 160 may be an elastic silicone compound or similar molding material. The present disclosure is not limited in this regard. The molding compound may flow into the space above the floor 120, including into the recessed slots 134 in the top surface 122 of the floor 120 (*see also* **FIG. 3A****),** and may also flow through the molding apertures 132 and into the recessed channels 136 in the bottom surface 124 of the floor 120 (*see also* **FIG. 3B****).** After the injection process is complete, the first and second molding tool portions 140, 150 may be removed and the molding compound may be dried or cured, thus forming an elastic sealing pad 165 overmolded onto the floor 120.

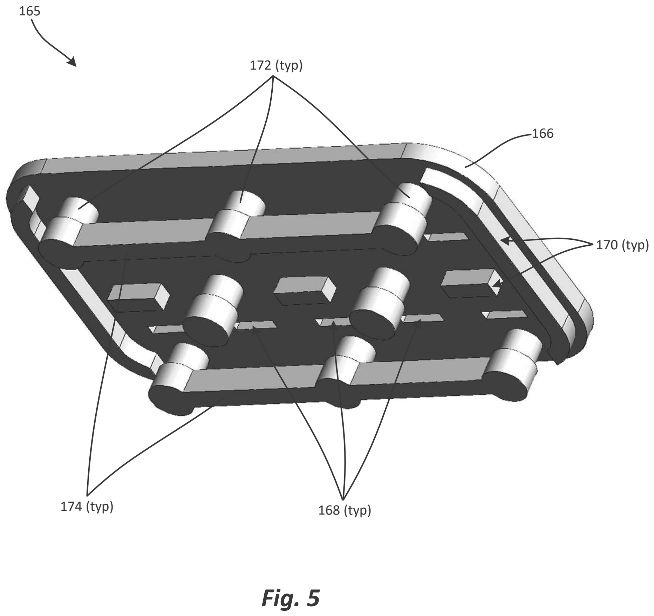

Referring to **FIG. 5****,** a bottom perspective view illustrating the sealing pad 165 in isolation (i.e., with the connection receptacle 114 omitted) is shown. The sealing pad 165 may include a generally flat main body 166 that rests on the top surface 122 of the floor 120 (*see* **FIG. 4B****).** The main body 166 may have a thickness in a range of 1 millimeter to 5 millimeters. The main body 166 may have a plurality of pin apertures 168 extending therethrough (formed by the neck portions 148 of the tines 144 of the first molding tool portion 140 during the overmolding process described above) that align with the pin apertures 130 in the floor 120. The sealing pad 165 may further include ribs 170 that extend from the bottom of the main body 166 and into the respective recessed slots 134 in the top surface 122 of the floor 120 (*see also* **FIG. 3A****).** The sealing pad 165 may further include pillars 172 that extend from the bottom of the main body 166, through the molding apertures 132 of the floor 120, wherein some of the pillars 172 are connected to one another by crossmembers 174 that extend through the recessed channels 136 in the bottom surface 124 of the floor 120 (*see also* **FIG. 3A****).** Thus, the ribs 170, pillars 172, and crossmembers 174 fasten the main body 166 to the floor 120 and secure the main body 166 against shifting or twisting within the connection receptacle 114 and against being pulled out of the connection receptacle 114.

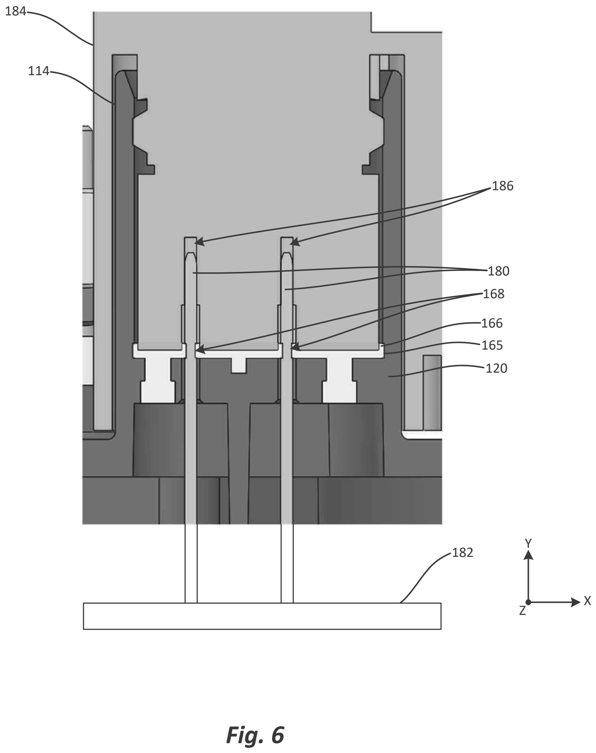

Referring to **FIG. 6****,** a cross-sectional view illustrating a portion of a completed PDM in accordance with the present disclosure is shown, including the housing 110, connection receptacle 114, floor 120, and overmolded sealing pad 165 described above. Electrically conductive pins 180 may extend from within the housing 110 (e.g., from a circuit board 182 within the housing 110), through the pin apertures 130 in the floor 120 and the pin apertures 168 in the sealing pad 165, and into the connection receptacle 114. A connector 184 of a wiring harness may be plugged into the connection receptacle 114, and the pins 180 may extend into complementary sockets 186 of the connector 184 for establishing electrical connections between PDM devices (not shown) within the housing 110 and various external systems and components. With the connector 184 plugged into the connection receptacle 114 thusly, a lower face of the connector 184 may flatly engage, and may vertically compress, the main body 166 of the sealing pad 165, thereby establishing a fluid-tight seal therebetween. Additionally, each of the pin apertures 168 in the sealing pad 165 may have a width and a depth (measured along the X and Z axes of the illustrated Cartesian coordinate system, respectively) that are smaller than a width and a depth of a respective pin 180 extending therethrough. Thus, when the pins 180 are inserted through the pin apertures 168, the pins 180 may be forced into intimate contact with the edges of the main body 166 that bound the pin apertures 168, thereby establishing fluid-tight, interference fits therebetween.

Owing to the above-described structures and arrangements, including the sealing pad 165 and the cooperating structural features of the connection receptacle 114, the ingress of water around the pins 180 and into the housing 110 may be prevented or significantly mitigated, even when the connector 184 is not plugged into the connection receptacle 114 or if a gasket of the connector 184 is undersized or is damaged.

As used herein, an element or step recited in the singular and proceeded with the word "a" or "an" should be understood as not excluding plural elements or steps, unless such exclusion is explicitly recited.

## Claims

1. A connection receptacle comprising:
a sidewall bounding a floor having a top surface and a bottom surface;
a plurality of pin apertures extending through the floor;
a plurality of molding apertures extending through the floor;
a recessed channel formed in the bottom surface of the floor, the recessed channel extending between two of the plurality of molding apertures; and
a sealing pad comprising:
a main body disposed on the top surface of the floor, the main body having a plurality of pin apertures extending therethrough;
a plurality of pillars extending from a bottom of the main body through respective ones of the plurality of molding apertures in the floor; and
a crossmember extending through the recessed channel in the bottom surface of the floor and connecting two of the plurality of pillars.

2. The connection receptacle of claim 1, further comprising a latching element extending from the sidewall.

3. The connection receptacle of claim 1 or 2, further comprising a recessed slot formed in the top surface of the floor.

4. The connection receptacle of claim 3, the sealing pad further comprising a rib extending from a bottom of the main body into the recessed slot.

5. The connection receptacle of any of the preceding claims, wherein the sealing pad is formed of silicone.

6. The connection receptacle of any of the preceding claims, wherein the pin apertures in the main body are aligned with the pin apertures in the floor.

7. The connection receptacle of claim 6, wherein the pin apertures in the main body have widths and depths that are smaller than respective widths and depths of the pin apertures in the floor.

8. The connection receptacle of any of the preceding claims, wherein the main body has a thickness in a range of 1 millimeter to 5 millimeters.

9. A method of forming a sealing pad in a connection receptacle, the connection receptacle including a sidewall bounding a floor having a top surface and a bottom surface, a plurality of pin apertures extending through the floor, a plurality of molding apertures extending through the floor, and a recessed channel formed in the bottom surface of the floor, the recessed channel extending between two of the plurality of molding apertures, the method comprising:
moving a first molding tool portion into a position below the floor, including moving an upper surface of the first molding tool portion into flat abutment with the bottom surface of the floor, wherein the first molding tool portion incudes a plurality of tines extending from the upper surface thereof, each tine comprising:
a base portion extending into a respective one of the plurality of pin apertures in the floor; and
a neck portion extending from the base portion a distance above the top surface of the floor;
inserting a second molding tool portion into the connection receptacle, including disposing a lower surface of the second molding tool portion atop the neck portions of the tines of the first molding tool portion; and
injecting a molding compound through a channel in one of the first molding tool portion and the second molding tool portion, the molding compound filling a cavity between the upper surface of the first molding tool portion and the lower surface of the second molding tool portion, including filling the molding the molding apertures and the recessed channel.

10. The method of claim 9, wherein the base portion of each tine prevents the molding compound from entering a respective pin aperture in the floor.

11. The method of claim 9 or 10, wherein neck portions have widths and depths that are smaller than respective widths and depths of the pin apertures in the floor.

12. The method of claim 9, wherein molding compound is a silicone compound.

13. The method of any of the claims 9-12, wherein the connection receptacle further includes a recessed slot formed in the top surface of the floor, and wherein the molding compound fills the recessed slot.

14. A power distribution module housing comprising:
a cover; and
a connection receptacle according to any of the claims 1-8, extending from an exterior of the cover for receiving a connector of a wiring harness.

15. Use of the power distribution module according to claim 14, or the connection module according to any of the claims 1-8, in the method according to any of the claims 9-13.
